Europäisches Patentamt

(19) European Patent Office

Office européen des brevets

(11) Publication number: **0 035 492**
**B1**

(12) # EUROPEAN PATENT SPECIFICATION

(45) Date of publication of patent specification: **28.09.83**          (51) Int. Cl.³: **B 23 K 31/02**

(21) Application number: **79901508.6**

(22) Date of filing: **28.06.79**

(86) International application number:
**PCT/US79/00484**

(87) International publication number:
**WO 81/00072 22.01.81 Gazette 81/2**

(54) **IMPROVED METHOD OF FORMING A SOCKET WELD.**

| | |
|---|---|
| (43) Date of publication of application:<br>**16.09.81 Bulletin 81/37** | (73) Proprietor: **COMBUSTION ENGINEERING, INC.**<br>**1000 Prospect Hill Road**<br>**Windsor Connecticut 06095 (US)** |
| (45) Publication of the grant of the patent:<br>**28.09.83 Bulletin 83/39** | (72) Inventor: **CAMP, Vernon Woodrow**<br>**8516 Igou Gap Road**<br>**Chattanooga, TN 37421 (US)**<br>Inventor: **LEACH, Pembroke Oscar**<br>**1002 Ault Drive**<br>**Chattanooga, TN 37404 (US)**<br>Inventor: **REARDON, James Edward**<br>**3522 Sunrise Terrace**<br>**Chattanooga, TN 37412 (US)** |
| (84) Designated Contracting States:<br>**DE FR GB SE** | |
| (56) References cited:<br>**DE - B - 1 184 607**<br>**DE - B - 1 565 472**<br>**FR - A - 1 138 566**<br>**GB - A - 863 320**<br>**JP - A - 45 025 970**<br>**US - A - 1 701 268**<br>**US - A - 2 447 085**<br>**US - A - 2 659 966**<br>**US - A - 3 003 601**<br>**US - A - 3 195 229** | (74) Representative: **Gross, Gernot K.**<br>**Kleiberweg 5**<br>**D-6200 Wiesbaden (DE)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Technical field

The invention relates to a method of forming a socket weld connection between a tubular element such as a pipe, a nipple or a nozzle and a second element such as another pipe, a drum, a header or a tube sheet.

When welding a tubular element such as a pipe, nipple or nozzle to a second element such as another tube, a boiler drum or a header or a tube sheet of a heat exchanger, a socket weld is often used wherein the end of the tubular element is inserted into a recess, termed a socket, in the surface of the second element. To properly align the tubular element prior to welding, it is desirable to bring the end of the tubular element in contact with the seat of the socket. However, a structure of this type is considerably stressed when the weld is made and tensions are produced in the weld seam which may cause cracking of the seam when the weld contracts as it cools. For this reason, contact of the end of the pipe with socket set is usually avoided by backing-off the tubular element away from the socket seat such that a gap of approximately one and one-half millimeters is maintained between the end of the tubular element and the socket seat. By doing this, the end of the tubular element is free to move axially downward as the weld contracts thereby relieving stresses in the weld seam which could otherwise cause cracking of the seam. Unfortunately, backing the tubular element away from the socket seat is a cumbersome operation which can also result in inaccurate positioning of the tubular element.

## Backgound art

The prior art, U.S. Patent No. 3,003,601, provided for a socket weld connection between a tubular element and a second element wherein a portion of the end of the tubular element was maintained in contact with the seat of a flat bottom socket in the surface of the second element during the welding process without causing cracking of the resultant weld seam. According to this prior art, the end face of the tubular element must be machined to provide a relatively thin rim extending from the end of the tubular element. The tubular element is inserted into the socket such that the relatively thin rim extending from the end of the tubular element contacts the flat seat of the socket, a gap thereby being established between the end of the tubular element and the socket seat into which the relatively thin rim is free to deform upon shrinking of the weld.

## Disclosure of invention

A method of forming a socket weld between a tubular element having a flat end face and a second element comprising: boring into the surface of the second element, a recessed socket for receiving the tubular element, machining a seat on the end wall of the recessed socket, inserting the tubular element into the recessed socket so as to abut the end face thereof against the seat of the recessed socket, and depositing welding metal externally around the circumference of the tubular element at the intersection of the tubular element and the second element, characterized by tapering the seat of the recessed socket from its outer circumference radially inward at a taper angle with respect to the flat end face of the inserted tubular element of at least 10° so as to limit the abutment of the flat end face of the tubular element with the seat to a line contact along the outer circumference of the end face of the tubular element.

The method of the present invention provides that the flat end face of the tubular element is permitted to contact the seat of the recess thereby ensuring accurate positioning of the tubular element within the recess, while at the same time providing a gap between the end face of the tubular element and the seat of the recess so that the tubular element may deform upon shrinking of the structure after the weld has been made without causing excessive stresses and cracking within the weld connection. Contact between the end face of the tubular element and the seat of the socket is limited to a line contact along the outer circumference of the end of the tubular element. This limited contact has been shown to be sufficient to ensure accurate positioning of the tube, but not great enough to offer sufficient resistance to deformation to induce excessive stresses within the weld seam as the weld shrinks upon cooling.

## Brief description of the drawing

These and further features and advantages of the invention become evident in the description of the following embodiments shown in the drawing attached wherein:

Figure 1 is a sectional side elevation view of a tube socket welded to another tube with a fillet weld in accordance with a first embodiment of the method of the present invention; and

Figure 2 is a sectional side elevation view of a tubular element welded to a vessel with a single-J groove weld in accordance with a second embodiment of the method of the present invention.

## Best mode of carrying out the invention

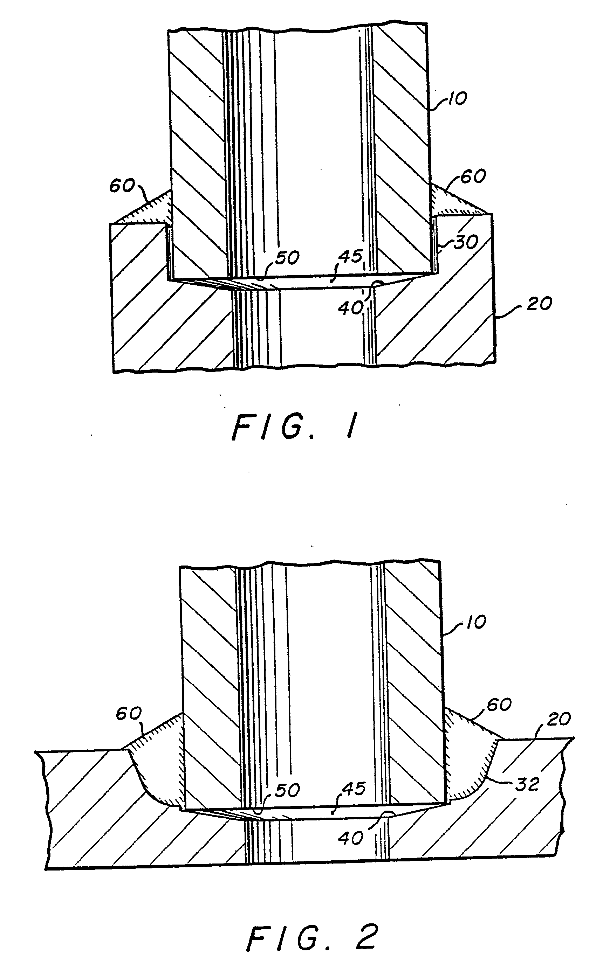

Referring to the drawings, a tubular element 10 is shown welded to a second element 20, such as another tube as shown in Figure 1 or a vessel such as a drum or header as shown in Figure 2. A recess is bored into the surface of the second element, and the end face 50 of the tubular element 10 is inserted therein. The recess may comprise a number of known shapes such as the simple annular socket 30 of Figure 1 or the more elaborate socket 32 of Figure 2 wherein a weld groove, such as a single-J pipe weld groove, is embodied in the socket itself. It is necessary to insert the tubular element 10 all the way into the recess 30, 32 until the end face 50 of tubular element 10 is in contact with the seat 40 of the socket so that proper and accurate positioning of the tubular element can be assured.

In accordance with the invention, the seat 40 of the socket 30, 32 is tapered from its outer circumference inward at a taper angle with respect to the flat end face of the inserted tubular element of at least 10°. Although any taper of an angle greater than 10° ensures that sufficient space is available for the end face of the tubular element to deform without causing excessive stresses in the weld seam, it is preferred that the angle of the taper be limited to not more than 15° in order to avoid removing unnecessary large amounts of metal from the second element which could locally adversely affect the structural integrity of the second element.

In forming the weld, welding metal is deposited externally around the circumference of the tubular element 10 at the intersection of the tubular element 10 with element 20 to form a weld seam 60 therebetween. As the weld seam 60 cools and contracts, the outer circumferential portion of the end face 50 of the tubular element 10 is free to deform inward and downward into the gap between the end face 50 of the tubular element 10 and the tapered seat 40 of the socket. Because the tubular element 10 is free to deform, stresses do not develop within the weld seam 60 upon contraction and the weld seam 60 is not subject to cracking. The gap 45 between the end face 50 of the tubular element 10 and the tapered seat 40 of the socket allows the desired deformation.

## Claims

1. A method of forming a socket weld connection between a tubular element (10) having a flat end face (50) and a second element (20) comprising: boring into the surface of the second element a recessed socket (30, 32) adapted to receive the tubular element: machining a seat (40) on the end wall of the recessed socket against which the end face of the tubular element may abut; inserting the tubular element into the recessed socket so as to abut the end face of the tubular element against the seat of the recessed socket thereby providing accurate positioning of the tubular element with the second element, and depositing welding metal (60) externally around the circumference of the tubular element at the intersection of the tubular element and the second element, characterized by: tapering the seat of the recessed socket from its outer circumference radially inward at a taper angle with respect to the flat end face of the inserted tubular element of at least 10° so as to limit abutment of the flat end face of the tubular element with the seat of the recessed socket of the second element to a line contact along the outer circumference of the end face of the tubular element.

2. A method according to Claim 1, further characterized in that the taper angle is not greater than 15°.

## Patentansprüche

1. Methode zur Bildung einer Muffenschweissverbindung zwischen einem röhrenförmigen Element (10) mit einer flachen Stirnfläche (50) und einem zweiten Element (20), wobei man in die Oberfläche des zweiten Elements eine Muffenausnehmung (30, 32) zur Aufnahme des röhrenförmigen Elements bohrt, auf der Stirnwand der Muffenausnehmung durch Bearbeitung einen Sitz (40) bildet, gegen den sich die Stirnfläche des röhrenförmigen Elements anlegen kann, das röhrenförmige Element so in die Muffenausnehmung einsetzt, dass die Stirnfläche des röhrenförmigen Elements am Sitz in der Muffenausnehmnung anliegt und dadurch eine exakte Positionierung des röhrenförmigen Elements mit dem zweiten Element herbeiführt, und aussen um den Umfang des röhrenförmigen Elements herum am Schnitt des röhrenförmigen Elements mit dem zweiten Element Schweissmetall aufbringt, gekennzeichnet durch eine Verjüngung des Sitzes in der Muffenausnehmung von deren Aussenumfang radial nach innen mit einem Kegelwinkel von mindestens 10° mit der flachen Stirnfläche des eingesetzten röhrenförmigen Elements, um den Anschlag der flachen Stirnfläche des röhrenförmigen Elements auf dem Sitz der Muffenausnehmung im zweiten Element auf Linienförmige Berührung entlang dem Aussenumfang der Stirnfläche des röhrenförmigen Elements zu begrenzen.

2. Methode nach Anspruch 1, ferner dadurch gekennzeichnet, dass der Kegelwinkel 15° nicht übersteigt.

## Revendications

1. Procédé de formation d'un raccord de soudure à douille entre un élément tubulaire (10) ayant une face en bout plate (50), et un second élément (20), ce procédé consistant à: forer, dans la surface du second élément, une cavité formant douille (30, 32) conçue pour recevoir l'élément tubulaire; usiner, sur la paroi en bout de cette cavité formant douille, un siège (40) contre lequel la face en bout de l'élément tubulare peut venir buter; introduire l'élément tubulaire dans la cavité formant douille, de telle sorte que sa face en bout vienne buter contre le siège de cette dernière en assurant ainsi une localisation précise de cet élément tubulaire par rapport au second élément; et déposer un métal de soudage (60) extérieurement autour de la circonférence de l'élément tubulaire à l'intersection de celui-ci et du second élément, caractérisé en ce que le siège de la cavité formant douille a une section décroissant radialement vers l'intérieur à partir de sa circonférence extérieure avec un angle de conicité d'au moins 10° par rapport à la face en bout plate de l'élément tubulaire introduit, de façon à limiter le contact entre la face en bout plate de l'élément tubulaire et le siège précité à une ligne s'étendant le long de la circonférence extérieure de cette paroi en bout.

2. Procédé suivant la revendication 1, caractérisé en ce que l'angle de conicité ne dépasse pas 15°.

FIG. 1

FIG. 2